# EUROPÄISCHE PATENTSCHRIFT

(11) **EP 2 754 873 B1**
(45) Veröffentlichungstag und Bekanntmachung des Hinweises auf die Patenterteilung: **23.09.2020**
(21) Anmeldenummer: 13192649.5
(22) Anmeldetag: 13.11.2013
(51) Int. Cl.: F01P 11/10, A01D 41/12, F01P 11/12

(54) **Ansaugsystem für Kühlluft**
Intake system for cooling air
Système d'aspiration d'air de refroidissement

(30) Priorität: 10.01.2013 DE 102013100202
(43) Veröffentlichungstag der Anmeldung: 16.07.2014
(73) Patentinhaber: CLAAS Selbstfahrende Erntemaschinen GmbH, 33428 Harsewinkel (DE)
(72) Erfinder: Hovenga, Frank, 48167 Münster (DE); Alterbaum, Andreas, 49186 Bad Iburg (DE); Waten, Björn, 48231 Warendorf (DE); Prangemeier, Maik, 59302 Oelde (DE)
(74) Vertreter: CLAAS Gruppe

(56) Entgegenhaltungen:
- DE-A1- 10 252 933
- US-A- 5 183 487
- US-A- 5 649 578
- US-A1- 2012 279 525

## Beschreibung

Die Erfindung betrifft eine Ansaugsystem für Kühlluft, die zumindest einem Wärmetauscher und/oder Kühlflächen von Aggregaten einer selbstfahrenden Erntemaschine zugeführt wird, wobei das Ansaugsystem ein von der Kühlluft durchströmtes Sieb aufweist, das eintrittsseitig mit einer Vorrichtung zum Entfernen und zum Zerkleinern von an der eintrittsseitigen Oberfläche des Siebes anhaftenden Bestandteilen der Kühlluft versehen ist, und wobei die Vorrichtung aus einer Absaugeinrichtung und einer Schneideinrichtung, die durch kammartig ausgebildete Elemente an der Oberfläche des Siebes und an einem dieser zugewandten Flächenabschnitt der Absaugeinrichtung oder eines mit diesem verbundenen Vorsatzelement gebildet wird, besteht

Selbstfahrende Erntemaschinen gemäß der vorgenannten Gattung können als Feldhäcksler oder als Mähdrescher ausgebildet sein. Bei einem selbstfahrenden Feldhäcksler werden ein Halmgut oder Mais über einen Erntevorsatz aufgenommen, dann einer aus Vorpresswalzen, einem Häckselaggregat und Nachzerkleinerungseinrichtungen bestehenden Aufbereitungseinrichtung zugeführt und schließlich über einen Auswurfbeschleuniger und einen verschwenkbaren Auswurfkrümmer einem Sammelwagen zugeführt. Dabei dienen eine am Ende des Auswurfkrümmers angeordnete verstellbare Klappe und die Verschwenkbarkeit des Auswurfkrümmers dazu, das aus diesem austretende Erntegut derart zu leiten, dass es auf den Sammelwagen gelangt, dass dieser vollständig befüllt werden kann.

Bei einem selbstfahrenden Mähdrescher erfolgt die Aufnahme des Erntegutes ebenfalls über einen Erntevorsatz, von dem aus es über einen Schrägförderer einer als Dreschwerk und Trenneinrichtungen ausgebildeten Aufbereitungseinrichtung zugeführt wird. Geerntete Getreidekörner, Rapsfrüchte oder Maiskörner gelangen aus dieser Aufbereitungseinrichtung in einen Korntank, während das Stroh, Maisstengel und andere für die Ernte nicht vorgesehenen Bestandteile auf dem Feld abgelegt werden. Für die Ernte von Mais wird der als Getreide- und Rapsschneidwerk ausgebildete Erntevorsatz gegen einen als Maispflücker ausgeführten Erntevorsatz ausgetauscht.

Ein Antrieb der vorgenannten selbstfahrenden Erntemaschinen erfolgt über eine Brennkraftmaschine, die vorzugsweise in deren Heckbereich angeordnet und von Verkleidungsteilen umgeben ist. Üblicherweise handelt es sich um eine wassergekühlte Brennkraftmaschine mit einem als Radiator ausgebildeten Wärmetauscher, welcher zum einen von Kühlwasser aus einem Kühlkreislauf der Brennkraftmaschine und zum anderen von der die Erntemaschine umgebenden Luft durchströmt wird. Weiterhin können innerhalb dieser Verkleidung der selbstfahrenden Erntemaschine auch Ölkühler für ein Hydrauliksystem der Erntemaschine, Ladeluftkühler, weitere Aggregate usw. angeordnet sein. Darüber hinaus kann auch die für den Verbrennungsprozess der Brennkraftmaschine über einen Abgasturbolader angesaugte Luft, die zuvor über einen Luftfilter gereinigt wird, innerhalb dieses durch Verkleidungsteile abgedeckten Bereiches angesaugt werden. Dabei muss selbstverständlich für die Kühlung des entsprechenden Wärmetauschers und auch für den Verbrennungsprozess stets eine ausreichende Luftmenge zur Verfügung stehen.

Während eines Erntevorganges ist aber die die Erntemaschine umgebende Luft stark verunreinigt, wobei diese Verunreinigungen bei der Getreide- oder Rapsernte einen hohen Staubanteil, um Anteile von Kurzstroh usw. aufweisen. Wird der selbstfahrende Mähdrescher zur Ernte von Mais eingesetzt, so kann es sich bei den Verunreinigungen der Luft zum Teil auch um Lieschblätter handeln, die die geernteten Maiskolben umschließen. Bei selbstfahrenden Feldhäckslern treten Verunreinigungen der Luft auf, die aus Halmbestandteilen des Häckselgutes und, sofern der selbstfahrende Feldhäcksler zur Ernte von Silomais eingesetzt wird, ebenfalls um komplette Lieschblätter oder von deren Bestandteilen handeln.

Da, wie bereits dargelegt, die Brennkraftmaschine im Heckbereich der Erntemaschine angeordnet ist, können bei einem selbstfahrenden Mähdrescher die im Bereich der Siebe und eines Anbauhäckslers auftretenden Verunreinigungen der Luft besonders massiv die vom Kühlsystem der Brennkraftmaschine und von sonstigen Kühlaggregaten angesaugte Luft verunreinigen. Bei selbstfahrenden Feldhäckslern kann die vom Kühlluftgebläse im Heckbereich angesaugte Luft unter Umständen Bestandteile des Häckselgutes aufweisen, da sich in diesem Bereich auch der Auslass des schwenkbaren Auswurfkrümmers befindet.

Aus diesem Grund wird in den Verkleidungsteilen ein Sieb angeordnet, das als Drahtgitter oder Lochblech ausgebildet ist und den wesentlichen Teil der in der Luft enthaltenen Verunreinigungen herausfiltert, so dass diese die nachfolgenden Lamellen der Wärmetauscher nicht zusetzen. Die Verunreinigungen lagern sich aber auf dem Sieb ab und setzen dieses zu, so dass dem jeweiligen hinter dem Sieb angeordneten Wärmetauscher nicht mehr genug Kühlluft zugeführt werden kann. Die zugeführte Kühlluftmenge kann auch nach relativ kurzen Betriebsintervallen dadurch reduziert werden, dass sich große Blätter, Kurzstroh oder sonstige Pflanzenbestandteile an der eintrittsseitigen Oberfläche des Siebes ansammeln und somit den Eintritt der Kühlluft versperren. Bei den großen Blättern kann es sich bei der Maisernte um die die Maiskolben umhüllenden Lieschblätter handeln, die sich nur schwer von der Oberfläche des Siebes entfernen lassen.

Ein Zusetzen des Siebes kann dadurch vermieden werden, dass eintrittsseitig an der Oberfläche des Siebes eine Absaugvorrichtung vorgesehen ist, die laufend die an der eintrittsseitigen Oberfläche anhaftenden Fremdteile absaugt. Ohne eine entsprechende Absaugeinrichtung wäre es erforderlich, dass der Fahrer der selbstfahrenden Erntemaschine oder eine für den Service der Erntemaschine verantwortliche Person regelmäßig manuell das Sieb reinigt. Allerdings wird diese Arbeit häufig erst dann durchgeführt, wenn die Kühlwassertemperatur, Hydrauliköltemperatur oder sonstige Temperaturen ansteigen, so dass unter Umständen durch zu hohe Bauteiltemperaturen Schäden an Bauteilen der Brennkraftmaschine oder der anderen Aggregate auftreten können, aus denen hohe Kosten und ein längerer Stillstand der Erntemaschine während der Ernte resultieren kann.

Ein Ansaugsystem für Kühlluft ist aus der EP 0 566 981 B1 bekannt. Innerhalb dieses Ansaugsystems ist ein kreis- oder topfförmig ausgebildetes Siebgehäuse mit radial verlaufenden Speichen angeordnet, wobei zwischen den Speichen einzelne Siebfelder verlaufen. Weiterhin weist das Siebgehäuse eine zentrische Nabe auf, wobei das Siebgehäuse gegenüber einer als radialer Arm ausgebildeten Absaugeinrichtung drehbar geführt ist. Über diese Absaugeinrichtung soll an der eintrittsseitigen Oberfläche der einzelnen Siebfelder, die während der Rotation des Siebgehäuses an diesem vorbeigeführt werden, ein Unterdruck erzeugt werden, so dass die Fremdteile von dieser Oberfläche abgesaugt werden. Weiterhin sind im Bereich der Speichen mit Zinken versehene Rechen vorgesehen, die mit einem zweiten an einer voreilenden Kante der Absaugeinrichtung ausgebildeten Rechen, der Zinnen aufweist, zusammenwirken. Das Siebgehäuse wird während des Reinigungsvorgangs über einen Riementrieb in Drehung versetzt, wobei die mit Zinken versehenen Rechen Nuten zwischen den Zinnen des zweiten Rechens durchlaufen und dabei Hülsen, Schalen, Blätter und andere Pflanzenteile, die auf dem Sieb festgehalten werden, zerschneiden und zerkleinern sollen.

Aus der US5183487 ist ein Ansaugsystem für Kühlluft gemäß dem Oberbegriff des Anspruchs 1 bekannt.

Es ist Aufgabe der vorliegenden Erfindung, eine Anordnung zur Reinigung der Oberfläche des Siebes zu schaffen, mit der mit großer Funktionssicherheit anhaftende großblättrige und langstielige Pflanzenbestandteile fortlaufend in einer Weise zerkleinert werden, dass sie anschließend von der Absaugeinrichtung vollständig aufgenommen und abgeführt werden können.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 sollen die an der Oberfläche des Siebes angeordneten kammartigen Elemente als Messer ausgebildet sein, die auf mit Abstand zueinander verlaufenden Halte- bzw. Messerleisten, quer zu diesen ausgerichtet, angeordnet sind, wobei zumindest eine der Halteleisten mit ersten Messern versehen ist, deren Schneiden einen ziehenden Schnitt bewirken, und dass die kammartigen Elemente an beiden Stirnseiten der Absaugeinrichtung oder des mit diesem verbundenen Vorsatzelements als zweite Messer ausgebildet sind, deren Schneiden einen ziehenden Schnitt bewirken.

Die entsprechende Geometrie der Schneiden der beiden Messer sowie die Stellung der Schneiden in Bezug auf die Blätter, Halme usw. führen dazu, dass ein für ein günstiges Schneidverhalten erforderlicher Schnittwinkel eingehalten wird. Der daraus resultierende ziehende Schnitt steht im Gegensatz zu einem drückenden Schnitt, bei dem die Schneide rechtwinklig auf das zu schneidende Schnittgut auftrifft, was im vorliegenden Fall zur Folge haben kann, dass die Blätter und Halme von der Schneide des zweiten Messers mitgenommen werden, sich somit letztendlich vor der Absaugeinrichtung ansammeln und nicht von dieser aufgenommen werden können. Da erfindungsgemäß mit den Schneiden der beiden zusammenwirkenden Messer das an der Oberfläche des Siebes haftende Material prozesssicher zerkleinert wird, kann es anschließend mittels der Absaugeinrichtung vollständig von dieser entfernt werden.

Demgegenüber sind nach der EP 0 566 981 B1 die am Rechen vorgesehenen Zinken, sofern sie mit einer Montagebohrung versehen sind, mit Abflachungen versehen, während die übrigen Zinken eine ovale Form aufweisen. Sofern dadurch überhaupt eine Zerkleinerung der auf den Siebfeldern anhaftenden Verunreinigungen erfolgen kann, sind diese Kanten nur in der Lage dazu, einen drückenden Schnitt herbeizuführen. Die auf der Kante der Absaugeinrichtung in der einzigen vorgesehenen Bewegungsrichtung des Siebes vorgesehenen Zinnen weisen rechteckig ausgebildete Stirnflächen auf, so dass sie beim Durchlaufen der Zinken durch die zwischen den Zinnen verlaufenden Nuten nicht zum Zerschneiden des an der Oberfläche der Siebfelder anhaftenden Materials dienen sondern das Material nur vor sich her fördern.

Gemäß der Erfindung sollen die am Sieb vorgesehenen ersten Messer mit ersten Schneiden ausgebildet sein, die in Bezug auf eine Ebene der Oberfläche des Siebes von einem, in Bewegungsrichtung gesehen, vorderen Ende aus schräg in Richtung eines hinteren Endes, also stetig, ansteigen. Dieser Neigungswinkel der Schneide jedes einzelnen Messers führt dazu, dass bei einer Bewegung der Absaugeinrichtung gegenüber der Sieboberfläche ein ziehender Schnitt bewirkt wird, so dass sich ein optimales Schneidverhalten erzielen lässt.

Alternativ dazu kann die Geometrie der Schneiden der ersten Messer derart gestaltet sein, dass die Schneide von einem, in Bewegungsrichtung gesehen, vorderen Ende aus gekrümmt, vorzugsweise hyperbelartig ansteigt. Auch mit einer derart gekrümmten Schneide lässt sich in vorteilhafter Weise ein ziehender Schnitt erzielen. In beiden Fällen können die Messer von ihrem Fuß aus in Richtung eines Scheitelpunktes spitzwinklig verlaufen und sich, ebenfalls in Bewegungsrichtung gesehen, vom vorderen Ende in Richtung des hinteren Endes verbreitern. Dadurch haben die Messer die Form von Schneidezähnen. Das führt dazu, dass sich der Abstand zwischen den Messern in Bewegungsrichtung verringert. Unter Bewegungsrichtung ist in diesem Fall natürlich nicht zu verstehen, dass die ersten Messer bewegt werden müssen, sondern dass eine Relativbewegung zwischen den ersten und den zweiten Messern in dieser Richtung stattfindet.

Dabei kann es zweckmäßig sein, die ersten Schneiden in beiden Bewegungsrichtungen bis zu einem Scheitel schräg oder hyperbelartig ansteigen zu lassen, sofern das Sieb und die Absaugeinrichtung in zwei Bewegungsrichtungen zueinander bewegt werden. Entsprechende Anordnungen, bei denen derartige Bewegungsabläufe stattfinden, werden nachfolgend im Zusammenhang mit den Vorteilsangaben zu den weiteren Patentansprüchen erläutert.

In weiterer Ausgestaltung der Erfindung wird vorgeschlagen, dass die zumindest mittelbar an der Absaugeinrichtung angeordneten zweiten Messer, die sich von dem entsprechenden Bauteil aus in Richtung der Oberfläche des Siebes erstrecken, zweite Schneiden aufweisen, die von ihrer Aufnahme aus in Bewegungsrichtung schräg nach hinten verlaufen. Auch in diesem Fall besteht eine alternative Lösung darin, die zweiten Schneiden gekrümmt, vorzugsweise hyperbelartig auszubilden. Es lässt sich folglich mit diesen zumindest mittelbar von der Absaugeinrichtung ausgehenden Messern ein ziehender Schnitt realisieren.

Weiterhin soll das Sieb rechteckig ausgebildet und von einem Siebrahmen aufgenommen sein, wobei die Absaugeinrichtung über einen Laufwagen mittels einer Linearführung gegenüber dem Sieb geführt ist. Die aus dem Sieb und dem Siebrahmen bestehende Einheit ist auf diese Weise im Wesentlichen an die Abmessungen des diesem in Strömungsrichtung der Kühlluft folgenden Wärmetauschers angepasst, so dass die gesamte Kühlluft vom Sieb aus unmittelbar in den Wärmetauscher geführt wird. Ein rechteckig ausgebildeter Siebrahmen lässt sich im Vergleich zu anderen geometrischen Formen baulich besser in die Verkleidungen der Erntemaschine integrieren. Die auf dem Laufwagen angeordnete Absaugeinrichtung erstreckt sich dabei in vertikaler Richtung über die entsprechende Abmessung des Siebes und verfährt von einem Startpunkt an einem ersten Ende des Siebes bis zu einem Wendepunkt an einem anderen Ende des Siebes.

Natürlich kann die Linearführung auch derart angeordnet sein, dass der Laufwagen mit der Absaugeinrichtung in vertikaler Richtung über das Sieb bewegt wird. Ein Antrieb des Laufwagens erfolgt vorzugsweise über einen Elektromotor oder einen Hydraulikmotor, wobei an dem jeweiligen Wendepunkt eine entsprechende Umschaltung des Antriebs erfolgen kann. Die ersten Messer an den äußeren halteleisten sind dabei zueinander spiegelbildlich ausgebildet. In entsprechender Weise haben auch die an den Stirnseiten der Absaugeinrichtung über die zweiten Halteleisten angeordneten zweiten Messer zueinander einen spiegelbildlichen Verlauf. Dadurch wird erreicht, dass in den vertikalen Randbereichen des Siebes in je einer Bewegungsrichtung ein ziehender Schnitt erzielt wird, so dass sich in diesen Randbereichen Material, das sich nicht mehr absaugen lässt, nicht stauen kann.

Dabei kann die Linearführung in weiterer vorteilhafter Ausgestaltung der Erfindung durch eine zwischen parallel zueinander verlaufenden Rahmenteilen des Siebrahmens angeordnete Schiene und zumindest mittelbar an einem Gehäuse der Absaugeinrichtung drehbar gelagerten Führungsrollen gebildet werden. Wenn in diesem Zusammenhang die Schiene als Rohr ausgebildet ist, so soll weiterhin in zweckmäßiger Weise jede der Führungsrollen mit einer dem Krümmungsradius des Rohres angepassten Mantelfläche versehen sein. Dadurch wird eine präzise Führung der Absaugeinrichtung gegenüber der Siebfläche erreicht, so dass die zweiten Messer, die auf der Absaugeinrichtung oder auf einem an dieser befestigten Bauteil angeordnet sind, die zwischen den ersten Messern gebildeten Zwischenräume präzise durchlaufen. Eine Fixierung der ersten Messer auf der eintrittsseitigen Oberfläche des Siebes erfolgt über mehrere parallel zueinander verlaufende, zueinander beabstandete Halteleisten.

Vorzugsweise sollen nur den jeweiligen Enden der überfahrenen Siebfläche benachbart die Halteleisten mit ersten Messern versehen sein, die in erfindungsgemäßer Weise ausgebildet sind, d. h., diese Messer bewirken aus dem Wendepunkt heraus einen ziehenden Schnitt, so dass anschließend das Material von der Absaugeinrichtung aufgenommen werden kann. Eine jeweils in Bewegungsrichtung dahinterliegende Halteleiste kann dagegen mit Messern versehen sein, die beidseitig stirnseitige Schneiden aufweisen. Wird folglich ein Teil des Materials von den zweiten Messern der Absaugeinrichtung mitgenommen, so stößt dieses auf die Messer mit den stirnseitigen Schneiden und wird zusätzlich zerrissen bzw. zerrupft und über diese letztendlich in den Saugbereich der Absaugeinrichtung befördert.

Weiterhin soll mit dem Gehäuse der Absaugeinrichtung ein Abdeckblech verbunden sein, das das Sieb an seiner austrittsseitigen Oberfläche, der Absaugeinrichtung gegenüberliegend, abdeckt. Dadurch wird eine der Saugrichtung entgegenwirkender Kühlluftstrom unterbunden, der anderenfalls die Saugwirkung der Absaugeinrichtung verringern würde. Schließlich soll die Absaugeinrichtung über ein Absaugrohr mit einem Sauggebläse verbunden sein, dem eine Abscheideeinrichtung zugeordnet ist. Beim Gebläse kann es sich um ein Radialgebläse handeln, wobei die mit den Fremdteilen angereicherte Luft auf entsprechende Flächen auftritt, so dass diese Bestandteile abgeschieden werden.

Die Erfindung ist durch den beigefügten Anspruch 1 definiert. Vorteilhafte Ausgestaltungen der Erfindung sind durch die abhängigen Ansprüche definiert. Die Bezugnahme der Patentansprüche auf die Zeichnung durch die Verwendung von Bezugszeichen soll den Schutzumfang der Patentansprüche nicht beschränken.

Vorteilhafte Ausgestaltungen der Erfindung, die nachfolgend erläutert werden, sind in den Zeichnungen dargestellt. Es zeigen:
- Figur 1: eine Seitenansicht einer als selbstfahrender Feldhäcksler ausgebildeten Erntemaschine mit einem Teilschnitt im Bereich eines vor einem Wärmetauscher einer Brennkraftmaschine angeordneten Siebes,
- Figur 2: eine perspektivische Ansicht einer Siebanordnung mit einem in Strömungsrichtung der Kühlluft dahinterliegenden in einem Kühlergehäuse angeordneten Wärmetauscher und mit einem Schnitt durch das Sieb,
- Figur 3: eine vergrößerte Ansicht gemäß Ausschnitt III in Figur 2, in der, ebenfalls in perspektivischer Ansicht, eine mit zweiten Messern versehene Absaugeinrichtung in Bezug auf erste auf Halteleisten angeordneten Messern dargestellt ist,
- Figur 4: eine perspektivische Darstellung einer mit ersten Messern versehenen Messerleiste,
- Figur 5: als vergrößerte Darstellung eine Seitenansicht eines ersten Messers mit einem Schnitt durch die Halteleiste,
- Figur 6: eine perspektivische Darstellung einer mit zweiten Messern versehenen Messerleiste und
- Figur 7: eine Seitenansicht eines zweiten Messers mit einem Schnitt durch die Halteleiste.

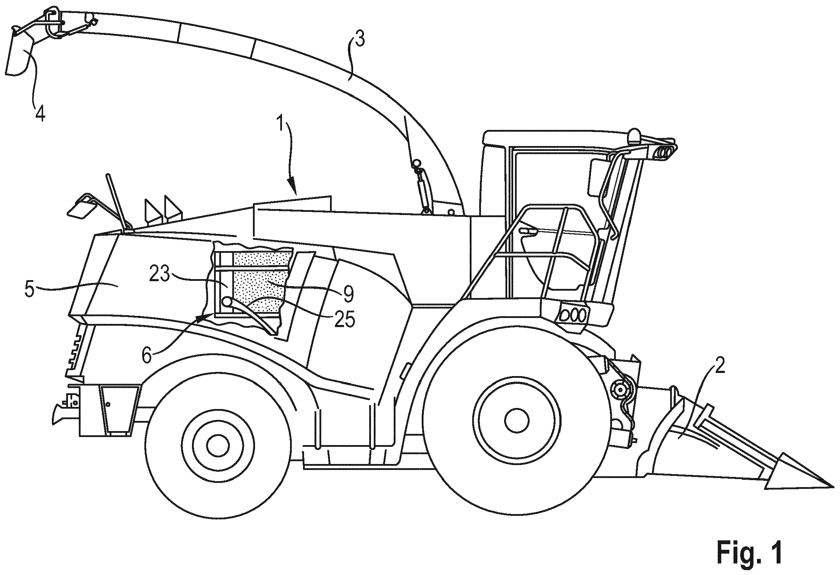

In Figur 1 ist eine selbstfahrende Erntemaschine 1 dargestellt, die als Feldhäcksler ausgebildet ist. Die Erntemaschine nimmt in ihrem Frontbereich einen Erntevorsatz 2 auf, über den das Erntegut geschnitten, aufgenommen und einer nicht näher dargestellten Häcksel- und Aufbereitungseinrichtung zugeführt wird. Diese verlässt das gehäckselte und aufbereitete Erntegut mit Hilfe eines ebenfalls nicht dargestellten Auswurfbeschleunigers durch einen verstellbaren Auswurfkrümmer 3, der mit einer Auswurfklappe 4 versehen ist. Die Erntemaschine 1 ist beidseitig mit Verkleidungselementen 5 versehen, wobei sich hinter dem in Figur 1 dargestellten Verkleidungselement 5 ein einer nicht dargestellten Brennkraftmaschine zugeordnetes Ansaugsystem 6 liegt, das in den nachfolgenden Figuren näher beschrieben wird.

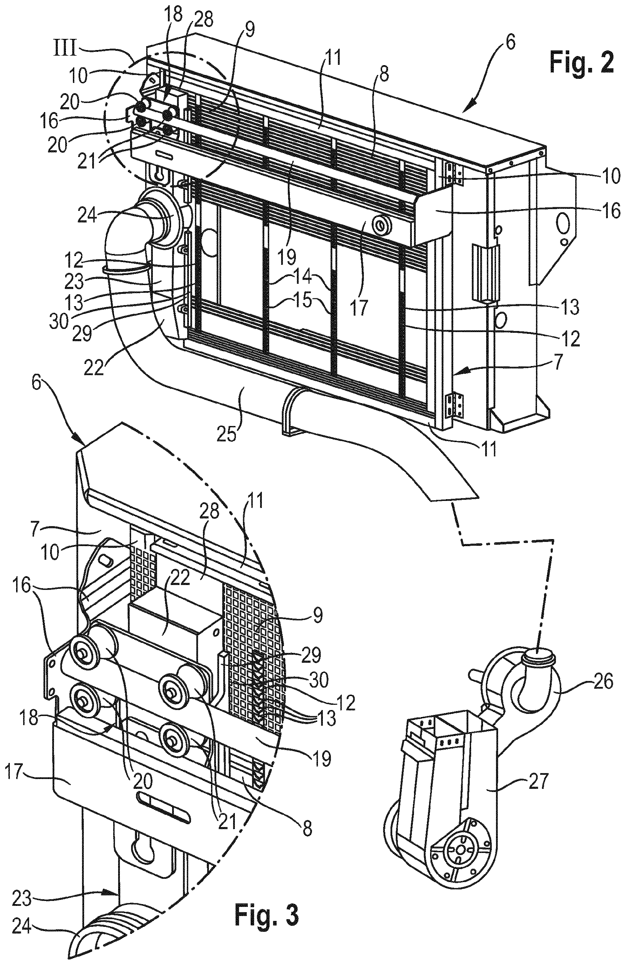

Nach den Figuren 2 und 3 weist das Ansaugsystem 6 einen in einem Aufnahmegehäuse 7 angeordneten Wärmetauscher 8 auf. Diesem Wärmetauscher 8 ist in Strömungsrichtung der Kühlluft ein nur im linken Bereich des Wärmetauschers sichtbares Sieb 9 vorgeordnet, das auf vertikalen Rahmenteilen 10 sowie horizontalen Rahmenteilen 11 des Aufnahmegehäuses 7 befestigt ist. Das Sieb 9 erstreckt sich natürlich über die gesamte Kühlfläche des Wärmetauschers 8. Durch den Schnitt sollen die hinter dem Sieb 9 verlaufenden Kühllamellen des Wärmetauschers 8 teilweise sichtbar sein. Auf dem Sieb 9 sind über äußere, im Bereich der vertikalen Rahmenteile 10 liegende Halteleisten 12 vorgesehen, die erfindungsgemäß ausgebildete erste Messer 13 aufnehmen. Im mittleren Bereich des Siebes 9 befinden sich zwei Messerleisten 14, die mit zweischneidigen, in beiden Bewegungsrichtungen ausgerichteten Messern 15 versehen sind. Außerdem ist an jeder der beiden vertikal verlaufenden Rahmenteilen 10 eine Konsole 16 angeordnet, wobei diese beiden Konsolen 16 miteinander über eine Querstrebe 17 verbunden sind. Weiterhin befindet sich zwischen den beiden Konsolen 16 ein als Schiene eines Linearführungssystems 18 ausgebildetes Rohr 19, auf dem über Rollenpaare 20 und 21 ein Gehäuse 22 einer Absaugeinrichtung 23 geführt ist.

Diese Absaugeinrichtung 23 erstreckt sich in vertikaler Richtung über einen Teilbereich des Siebes 9 und wirkt in ähnlicher Weise wie eine Staubsauerdüse. Dabei ist das Gehäuse 22 der Absaugeinrichtung 23 über einen Stutzen 24, über ein Absaugrohr 25 mit einem Sauggebläse 26 verbunden, welches seinerseits in eine Abscheideeinrichtung 27 einmündet. Außerdem geht von dem Gehäuse 22 in dessen oberen Bereich ein Abdeckblech 28 aus, das das Sieb 9 an seiner austrittsseitigen Oberfläche im Bereich der Absaugeinrichtung 23 abdeckt und gemeinsam mit dieser verfahren wird.

Wie weiterhin der vergrößerten Darstellung nach der Figur 2 entnommen werden kann, ist am Gehäuse 22 der Absaugeinrichtung 23 eine zweite Halteleiste 29 angeordnet, die erfindungsgemäß ausgebildete zweite Messer 30 aufnimmt und in der Darstellung nach der Figur 2 auf die am Sieb 9 fixierte Halteleiste 12 zubewegt wird. Eine weitere, entsprechende zweite Messer aufnehmende zweite Halteleiste, die in der Darstellung nicht sichtbar ist und deren Messer spiegelbildlich zu den der sichtbaren zweiten Halteleiste 25 zugeordneten zweiten Messern 26 ausgebildet sind, befindet sich auf der gegenüberliegenden Seite des Gehäuses 22. Die Absaugeinrichtung 23 wird, wie aus den Figuren 1 und 2 hervorgeht, über die Rollenpaare 20 und 21 wie ein Laufwagen auf dem Rohr 19 geführt. Dabei saugt die Absaugeinrichtung 23 die auf der Oberfläche des Siebes 9 befindlichen Verunreinigungen von diesem ab und fördert sie in die Abscheideeinrichtung 27.

Befinden sich an der eintrittsseitigen Oberfläche des Siebes 9, die in der Figuren 3 gezeigt ist, Pflanzenbestandteile, wie z. B. Maislieschen, Kurzstroh usw., so wird dieses Material während der Bewegung der zweiten Halteleiste 29 gegenüber der in den Figuren 2 und 3 dargestellten ersten äußeren Halteleiste 12 von den ersten und zweiten Messern 13 bzw. 30 zerschnitten und kann anschließend von der Absaugeinrichtung 23 aufgenommen und in die Abscheideeinrichtung 27 gefördert werden. Die zweischneidigen Messer 15 der mittig des Siebes 9 angeordneten Messerleisten 14 führen auf Grund der stirnseitigen Anordnung ihrer Schneiden einen drückenden Schnitt aus, so dass die eventuell durch die zweiten Messer 30 mitgenommenen Bestandteile weiter zerrissen und zerrupft werden und anschließend in diesem Zustand in den Saugbereich der Absaugeinrichtung 23 gelangen.

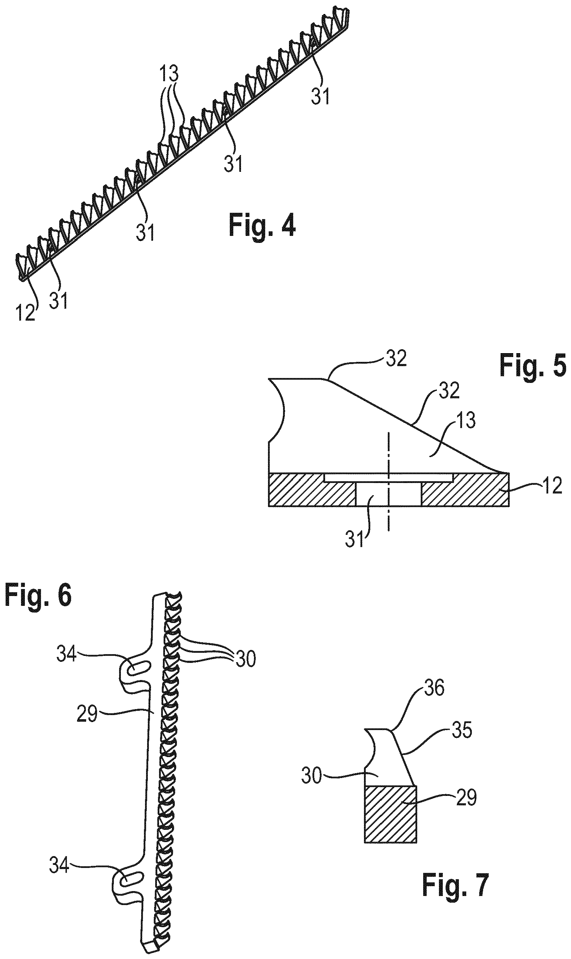

Hinsichtlich der Ausbildung der auf den äußeren Halteleisten 12 angeordneten ersten Messer 13 wird auf die Figuren 4 und 5 verwiesen. Die Figur 4 zeigt die entsprechende Halteleiste 12 mit den ersten Messern 13 perspektivisch. In der Halteleiste 13 sind mehrere Befestigungsbohrungen 31 vorgesehen, über die die Halteleiste 12 am Sieb 9 fixiert werden kann. Der Figur 4, die eines der ersten Messer 13 gegenüber Figur 3 vergrößert zeigt, ist zu entnehmen, dass dieses Messer 13 eine Schneide 32 aufweist, die schräg verläuft, d. h., die Schneide 32 steigt in Bewegungsrichtung, ausgehend von der Halteleiste 12, bis zum Erreichen eines Scheitelpunktes 33 an, woraus ein ziehender Schnitt resultiert.

Weiterhin ist in der Figur 7 die zweite Halteleiste 29, die am Gehäuse 22 der Absaugeinrichtung 23 mittels Halteaugen 34 fixiert wird, perspektivisch dargestellt. Die an dieser zweiten Halteleiste 29 befestigten zweiten Messer 30 weisen eine in Bewegungsrichtung des Gehäuses gerichtete schräg verlaufende Schneide 35 auf, die von der Halteleiste 29 aus bis zum Erreichen eines Scheitelpunktes 36 ansteigt. Durch deren Schnittwinkel wird ebenfalls ein ziehender Schnitt bewirkt. Die zusammenwirkenden ersten und zweiten Messer 13 und 30 zerschneiden das Blatt- oder Stängelmaterial in einer Weise, dass sich keine Reste von diesem im Bereich der vertikalen Rahmenteile, in denen eine Umkehr der Bewegungsrichtung der Absaugeinrichtung 23 erfolgt, ansammeln können. In vorteilhafter Weise können stattdessen alle Verunreinigungen von der eintrittsseitigen Oberfläche des Siebes 9 prozesssicher entfernt werden, so dass dem Wärmetauscher 8 stets Kühlluft in ausreichender Menge zugeführt wird.

### Bezugszeichenliste

- 1: selbstfahrende Erntemaschine
- 2: Erntevorsatz
- 3: Auswurfkrümmer
- 4: Auswurfklappe
- 5: Verkleidungselement
- 6: Ansaugsystem für Kühlluft
- 7: Aufnahmegehäuse
- 8: Wärmetauscher
- 9: Sieb
- 10: vertikales Rahmenteil
- 11: horizontales Rahmenteile
- 12: äußere Halteleisten
- 13: erste Messer
- 14: Messerleisten
- 15: zweischneidige Messer
- 16: Konsole
- 17: Querstrebe
- 18: Linearführungssystem
- 19: Rohr
- 20: Rollenpaar
- 21: Rollenpaar
- 22: Gehäuse von 20
- 23: Absaugeinrichtung
- 24: Stutzen
- 25: Absaugrohr
- 26: Sauggebläse
- 27: Abscheideeinrichtung
- 28: Abdeckblech
- 29: zweite Halteleiste
- 30: zweite Messer
- 31: Befestigungsbohrung
- 32: schräge Schneide von 13
- 33: Scheitelpunkt
- 34: Halteaugen
- 35: schräg verlaufende Schneide von 30
- 36: Scheitelpunkt

## Patentansprüche

1. Ansaugsystem (6) für Kühlluft, die zumindest einem Wärmetauscher (8) und/oder Kühlflächen von Aggregaten einer selbstfahrenden Erntemaschine (1) zugeführt wird, wobei das Ansaugsystem (6) ein von der Kühlluft durchströmtes Sieb (9) aufweist, das eintrittsseitig mit einer Vorrichtung zum Entfernen und zum Zerkleinern von an der eintrittsseitigen Oberfläche des Siebes (9) anhaftenden Bestandteilen der Kühlluft versehen ist, und wobei die Vorrichtung aus einer Absaugeinrichtung (23) und einer Schneideinrichtung, die durch kammartig ausgebildete Elemente an der Oberfläche des Siebes (9) und an einem dieser zugewandten Flächenabschnitt der Absaugeinrichtung (23) oder eines mit diesem verbundenen Vorsatzelement gebildet wird, besteht, wobei die an der Oberfläche des Siebes (9) angeordneten kammartigen Elemente als Messer (13, 15) ausgebildet sind, die auf mit Abstand zueinander verlaufenden Halte- bzw. Messerleisten (12, 14), quer zu diesen ausgerichtet, angeordnet sind, wobei zumindest eine der Halteleisten (12) mit ersten Messer (13) versehen ist und dass die kammartigen Elemente an beiden Stirnseiten der Absaugeinrichtung (23) oder des mit diesem verbundenen Vorsatzelements als zweite Messer (30) ausgebildet sind, **dadurch gekennzeichnet, dass** die am Sieb vorgesehenen ersten Messer (13) mit ersten Schneiden (32) ausgebildet sein, die in Bezug auf eine Ebene der Oberfläche des Siebes von einem, in Bewegungsrichtung der Absaugeinrichtung gesehen, vorderen Ende aus schräg in Richtung eines hinteren Endes, also stetig, ansteigen, wobei die Schneiden (32) des ersten Messers (13) und die Schneiden (35) des zweiten Messers (30) bei einer Bewegung der Absaugeinrichtung (23) gegenüber der Oberfläche des Siebes (9) einen ziehenden Schnitt bewirken.

2. Ansaugsystem (6) für Kühlluft nach Patentanspruch 1, **dadurch gekennzeichnet, dass** die am Sieb (9) vorgesehenen ersten Messer (13) mit Schneiden (32) ausgebildet sind, die in Bezug auf eine Ebene der Oberfläche des Siebes (9) von einem, in Bewegungsrichtung der Absaugeinreichtung (23) gesehen, vorderen Ende aus gekrümmt, vorzugsweise hyperbelartig ansteigen.

3. Ansaugsystem (6) für Kühlluft nach Patentanspruch 1, **dadurch gekennzeichnet, dass** die zumindest mittelbar an der Absaugeinrichtung (23) angeordneten zweiten Messer (30), die sich in Richtung der Oberfläche des Siebes (9) erstrecken, zweite Schneiden (35) aufweisen, die von ihrer Aufnahme aus in Bewegungsrichtung der Absaugeinrichtung (23) schräg nach hinten verlaufen.

4. Ansaugsystem (6) für Kühlluft nach Patentanspruch 3, **dadurch gekennzeichnet, dass** die zumindest mittelbar an der Absaugeinrichtung (23) angeordneten zweiten Messer (30), die sich in Richtung der Oberfläche des Siebes (9) erstrecken, zweite Schneiden (35) aufweisen, die von ihrer Aufnahme aus in Bewegungsrichtung der Absaugeinrichtung (23) hyperbelartig nach hinten verlaufen.

5. Ansaugsystem (6) für Kühlluft nach Patentanspruch 1, **dadurch gekennzeichnet, dass** das Sieb (9) rechteckig ausgebildet ist und von einem Rahmenteilen (10, 11) des Aufnahmegehäuses (7) oder des Wärmetauschers (8) aufgenommen wird, wobei die Absaugeinrichtung (23) über einen als Laufwagen ausgebildeten Gehäuse (22) mittels eines Linearführungssystems (18) gegenüber dem Sieb (9) geführt ist.

6. Ansaugsystem (6) für Kühlluft nach Patentanspruch 5, **dadurch gekennzeichnet, dass** nur die nahe den jeweiligen Endbereichen der von der Absaugeinrichtung (23) überstrichenen Oberfläche des Siebes (9) angeordneten äußeren Halteleisten (12) mit ersten Messern (13) versehen sind, deren Schneiden (32) einen ziehenden Schnitt bewirken.

7. Ansaugsystem (6) für Kühlluft nach Patentanspruch 6, **dadurch gekennzeichnet, dass** im Bereich einer Mitte der Oberfläche des Siebes (9) zumindest eine Messerleiste (14) mit Messern (15) vorgesehen ist, die an beiden Stirnseiten Schneiden aufweist.

8. Ansaugsystem (6) für Kühlluft nach Patentanspruch 5, **dadurch gekennzeichnet, dass** die Absaugeinrichtung (23) gegenüber dem Sieb (9) eine horizontale Bewegung ausführt.

9. Ansaugsystem (6) für Kühlluft nach Patentanspruch 1, **dadurch gekennzeichnet, dass** die ersten Messer (13) über mehrere parallel zueinander verlaufende, zueinander beabstandete Halteleisten (12) auf dem Sieb (9) fixiert sind.

10. Ansaugsystem (6) für Kühlluft nach Patentanspruch 5, **dadurch gekennzeichnet, dass** das Linearführungssystem (18) durch eine zwischen parallel zueinander verlaufenden Rahmenteilen (10) des Aufnahmegehäuses (7) angeordnete Schiene und zumindest mittelbar an einem Gehäuse (22) der Absaugeinrichtung (23) drehbar gelagerten Führungsrollen (20, 21) gebildet wird.

11. Ansaugsystem (6) für Kühlluft nach Patentanspruch 6, **dadurch gekennzeichnet, dass** die Schiene als Rohr (19) ausgebildet ist und dass die Führungsrollen (20, 21) eine dem Krümmungsradius des Rohr (19) angepasste Mantelfläche aufweisen.

12. Ansaugsystem (6) für Kühlluft nach Patentanspruch 1, **dadurch gekennzeichnet, dass** mit einem Gehäuse (22) der Absaugeinrichtung (23) ein Abdeckblech (28) verbunden ist, das das Sieb (9) an seiner austrittsseitigen Oberfläche, der Absaugeinrichtung (23) gegenüberliegend, abdeckt.

13. Ansaugsystem (6) für Kühlluft nach Patentanspruch 1, **dadurch gekennzeichnet, dass** die Absaugeinrichtung (23) über ein Absaugrohr (25) mit einem Saugebläse (26) verbunden ist, dem eine Abscheideeinrichtung (27) zugeordnet ist.

## Claims

1. An induction system (6) for cooling air which is fed to at least one heat exchanger (8) and/or cooling surfaces of assemblies of a self-propelled harvester (1), wherein the induction system (6) has a sieve (9) through which the cooling air flows and which is provided on the intake side with a device for removing and comminuting constituents of the cooling air, that adhere to the intake surface of the sieve (9), and wherein the device comprises a suction device (23) and a cutting device formed by elements of comb-like configuration at the surface of the sieve (9) and at a surface portion facing towards same of the suction device (23) and/or a frontal element connected thereto, wherein the comb-like elements arranged at the surface of the sieve (9) are in the form of blades (13, 15) which are arranged on holding or blade bars (12, 14) extending at a mutual spacing and oriented transversely relative thereto, wherein at least one of the holding bars (12) is provided with first blades (13) and the comb-like elements are in the form of second blades (30) at both ends of the suction device (23) or the frontal element connected thereto, **characterised in that** the first blades (13) provided on the sieve are provided with first cutting edges (32) which rise in relation to a plane of the surface of the sieve from a front end as viewed in the direction of movement of the suction device inclinedly in the direction of a rear end, that is to say steadily, wherein the cutting edges (32) of the first blade (13) and the cutting edges (35) of the second blade (30) produce a pulling cut upon a movement of the suction device (23) relative to the surface of the sieve (9).

2. An induction system (6) for cooling air according to claim 1 **characterised in that** the first blades (13) provided on the sieve (9) are formed with cutting edges (32) which rise in relation to a plane of the surface of the sieve (9) from a front end as viewed in the direction of movement of the suction device (23), in a curved configuration, preferably in hyperbolic fashion.

3. An induction system (6) for cooling air according to claim 1 **characterised in that** the second blades (30) which are arranged at least indirectly at the suction device (23) and which extend in the direction of the surface of the sieve (9) have second cutting edges (35) which extend inclinedly rearwardly from their mounting in the direction of movement of the suction device (23).

4. An induction system (6) for cooling air according to claim 3 **characterised in that** the second blades (30) which are arranged at least indirectly at the suction device (23) and which extend in the direction of the surface of the sieve (9) have second cutting edges (35) which extend rearwardly from their mounting in the direction of movement of the suction device (23) in hyperbolic fashion.

5. An induction system (6) for cooling air according to claim 1 **characterised in that** the sieve (9) is of a rectangular configuration and is mounted by frame portions (10, 11) of the receiving housing (7) or the heat exchanger (8), wherein the suction device (23) is guided with respect to the sieve (9) by way of a housing (22) in the form of a carriage by means of a linear guide system (18).

6. An induction system (6) for cooling air according to claim 5 **characterised in that** only the outer holding bars (12) arranged near the respective end regions of the surface of the sieve (9), over which the suction device (23) passes, are provided with first blades (13), the cutting edges (32) of which produce a pulling cut.

7. An induction system (6) for cooling air according to claim 6 **characterised in that** provided in the region of a centre of the surface of the sieve (9) is at least one blade bar (14) having blades (15), that has cutting edges at both ends.

8. An induction system (6) for cooling air according to claim 5 **characterised in that** the suction device (23) performs a horizontal movement relative to the sieve (9).

9. An induction system (6) for cooling air according to claim 1 **characterised in that** the first blades (13) are fixed on the sieve (9) by way of a plurality of mutually spaced holding bars (12) extending parallel to each other.

10. An induction system (6) for cooling air according to claim 5 **characterised in that** the linear guide system (18) is formed by a rail arranged between frame portions (10) extending parallel to each other of the receiving housing (7) and guide rollers (20, 21) mounted rotatably at least indirectly on a housing (22) of the suction device (23).

11. An induction system (6) for cooling air according to claim 6 **characterised in that** the rail is in the form of a tube (19) and the guide rollers (20, 21) have a peripheral surface matched to the radius of curvature of the tube (19).

12. An induction system (6) for cooling air according to claim 1 **characterised in that** connected to a housing (22) of the suction device (23) is a cover plate (28) which covers the sieve (9) at its outlet surface opposite the suction device (23).

13. An induction system (6) for cooling air according to claim 1 **characterised in that** the suction device (23) is connected by way of a suction pipe (25) to a suction blower (26) with which a separating device (27) is associated.

## Revendications

1. Système d'aspiration (6) pour de l'air de refroidissement qui est envoyé au moins à un échangeur de chaleur (8) et/ou à des surfaces de refroidissement d'organes d'une machine de récolte automotrice (1), le système d'aspiration (6) comportant un tamis (9) qui est traversé par l'air de refroidissement et qui est muni, côté entrée, d'un dispositif pour évacuer et pour fragmenter des composants de l'air de refroidissement adhérant à la surface côté entrée du tamis (9), et le dispositif étant constitué d'un équipement d'aspiration (23) et d'un équipement de coupe qui est formé par des éléments en forme de peignes contre la surface du tamis (9) et contre une portion de surface de l'équipement d'aspiration (23) tournée vers celle-ci ou contre un élément frontal relié à ladite portion de surface, les éléments en forme de peignes disposés contre la surface du tamis (9) étant conformés en couteaux (13, 15) qui sont disposés sur des barrettes de maintien, respectivement de couteaux (12, 14) s'étendant à distance les unes des autres, transversalement à celles-ci, au moins une des barrettes de maintien (12) étant munie de premiers couteaux (13), et en ce que les éléments en forme de peignes sur les deux faces frontales de l'équipement d'aspiration (23) ou de l'élément frontal relié à celui-ci sont conformés en seconds couteaux (30), **caractérisé en ce que** les premiers couteaux (13) prévus contre le tamis sont conçus avec des premiers tranchants (32) qui, par rapport à un plan de la surface du tamis, montent à partir une extrémité avant, vue dans le sens de déplacement de l'équipement d'aspiration, en direction d'une extrémité arrière, c'est-à-dire régulièrement, les tranchants (32) du premier couteau (13) et les tranchants (35) du second couteau (30) réalisant une coupe en traction en cas de déplacement de l'équipement d'aspiration (23) par rapport à la surface du tamis (9).

2. Système d'aspiration (6) pour de l'air de refroidissement selon la revendication 1, **caractérisé en ce que** les premiers couteaux (13) prévus contre le tamis (9) sont conçus avec des tranchants (32) qui, par rapport à un plan de la surface du tamis (9), montent de façon courbée, de préférence hyperbolique, à partir d'une extrémité avant, vue dans le sens de déplacement de l'équipement d'aspiration (23).

3. Système d'aspiration (6) pour de l'air de refroidissement selon la revendication 1, **caractérisé en ce que** les seconds couteaux (30) qui sont disposés au moins indirectement contre l'équipement d'aspiration (23) et qui s'étendent en direction de la surface du tamis (9), comportent des seconds tranchants (35) qui, à partir de leur logement, s'étendent en biais vers l'arrière dans le sens de déplacement de l'équipement d'aspiration (23).

4. Système d'aspiration (6) pour de l'air de refroidissement selon la revendication 3, **caractérisé en ce que** les seconds couteaux (30) qui sont disposés au moins indirectement contre l'équipement d'aspiration (23) et qui s'étendent en direction de la surface du tamis (9) comportent des seconds tranchants (35) qui, à partir de leur logement, s'étendent de manière hyperbolique vers l'arrière dans le sens de déplacement de l'équipement d'aspiration (23).

5. Système d'aspiration (6) pour de l'air de refroidissement selon la revendication 1, **caractérisé en ce que** le tamis (9) est de conformation rectangulaire et est reçu par une partie de cadre (10, 11) du carter récepteur (7) ou de l'échangeur de chaleur (8), l'équipement d'aspiration (23) étant guidé par rapport au tamis (9) par l'intermédiaire d'un boîtier (22) conformé en chariot au moyen d'un système de guidage linéaire (18).

6. Système d'aspiration (6) pour de l'air de refroidissement selon la revendication 5, **caractérisé en ce que** seules les barrettes de maintien extérieures (12) disposées près des zones d'extrémités respectives de la surface du tamis (9) balayée par l'équipement d'aspiration (23) sont munies de premiers couteaux (13) dont les tranchants (32) réalisent une coupe en traction.

7. Système d'aspiration (6) pour de l'air de refroidissement selon la revendication 6, **caractérisé en ce que**, dans la zone d'un milieu de la surface du tamis (9), est prévue au moins une barrette de couteaux (14) avec des couteaux (15), laquelle comporte des tranchants sur les deux faces frontales.

8. Système d'aspiration (6) pour de l'air de refroidissement selon la revendication 5, **caractérisé en ce que** l'équipement d'aspiration (23) effectue un déplacement horizontal par rapport au tamis (9).

9. Système d'aspiration (6) pour de l'air de refroidissement selon la revendication 1, **caractérisé en ce que** les premiers couteaux (13) sont immobilisés sur le tamis (9) par l'intermédiaire de plusieurs barrettes de maintien (12) s'étendant parallèlement les unes aux autres et distantes les unes des autres.

10. Système d'aspiration (6) pour de l'air de refroidissement selon la revendication 5, **caractérisé en ce que** le système de guidage linéaire (18) est formé par une glissière disposée entre des parties de cadre (10) du carter récepteur (7) s'étendant parallèlement les unes aux autres et par des galets de guidage (20, 21) montés à rotation au moins indirectement sur un boîtier (22) de l'équipement d'aspiration (23).

11. Système d'aspiration (6) pour de l'air de refroidissement selon la revendication 6, **caractérisé en ce que** la glissière est conformée en tube (19) et **en ce que** les galets de guidage (20, 21) comportent une surface latérale adaptée au rayon de courbure du tube (19).

12. Système d'aspiration (6) pour de l'air de refroidissement selon la revendication 1, **caractérisé en ce qu'**au boîtier (22) de l'équipement d'aspiration (23) est reliée une tôle de recouvrement (28) qui recouvre le tamis (9) au niveau de sa surface côté sortie située en vis-à-vis de l'équipement d'aspiration (23).

13. Système d'aspiration (6) pour de l'air de refroidissement selon la revendication 1, **caractérisé en ce que** l'équipement d'aspiration (23) est relié par l'intermédiaire d'un tube d'aspiration (25) à un ventilateur d'aspiration (26) auquel est associé un dispositif de séparation (27).
